# EUROPÄISCHE PATENTSCHRIFT

(11) **EP 0 889 577 B1**
(45) Veröffentlichungstag und Bekanntmachung des Hinweises auf die Patenterteilung: **29.12.2004**
(21) Anmeldenummer: 98109000.4
(22) Anmeldetag: 18.05.1998
(51) Int. Cl.: H02K 49/02, F01P 5/10, F01P 7/04, F02B 63/00

(54) **Schlupfkupplung für ein antreibbares Aggregat, insbesondere Nebenaggregat einer Brennkraftmaschine**
Slip clutch for a drivable assembly, in particular for an auxiliary apparatus of an internal combustion engine
Unité d'embrayage pour un ensemble entraînable, en particulier pour un appareil auxiliaire d'un moteur à combustion interne

(30) Priorität: 01.07.1997 DE 19727914
(43) Veröffentlichungstag der Anmeldung: 07.01.1999
(73) Patentinhaber: Bayerische Motoren Werke Aktiengesellschaft, 80788 München (DE)
(72) Erfinder: Kuttler, Wolfgang, 4594 Waldneukirchen (AT)

(56) Entgegenhaltungen:
- US-A- 3 889 140
- PATENT ABSTRACTS OF JAPAN vol. 016, no. 285 (E-1222), 24. Juni 1992 (1992-06-24) & JP 04 071360 A (ISUZU MOTORS LTD), 5. März 1992 (1992-03-05)

## Beschreibung

Die Erfindung bezieht sich nach dem Oberbegriff des Patentanspruches 1 auf eine Schlupfkupplung für ein antreibbares Aggregat, insbesondere Nebenaggregat einer Brennkraftmaschine, die ein angetriebenes Primärteil mit einer magnetisierbaren Einrichtung und ein mit dem Aggregat drehfest verbundenes, dem Primärteil benachbartes Sekundärteil mit einer permanentmagnetischen Vorrichtung umfaßt.

Die Erfindung geht von der japanischen Patentanmeldung 04 331 455 aus. In dieser ist eine Schlupfkupplung für ein antreibbares Nebenaggregat einer Brennkraftmaschine offenbart, wobei die Schlupfkupplung folgende Merkmale aufweist:
- Ein Primärteil mit einer als magnetisierbare Einrichtung ausgestalteten Induktionsspule mit einem in Reihe angeordneten, gesteuert veränderbaren Widerstand als Impedanzwandler und
- ein dem Primärteil benachbartes Sekundärteil mit einer Vorrichtung, die ringförmig angeordnete Permanentmagnete umfasst, wobei jede Induktionsspule kurzgeschlossen ist, mit einem in jeder Kurzschlussleitung angeordneten Impedanzwandler.

Das Primärteil ist dazu geeignet, angetrieben zu werden und das Sekundärteil ist dazu geeignet, mit einem Aggregat drehfest verbunden zu werden.

### [Aufgabe der Erfindung]

Der Erfindung liegt die Aufgabe zugrunde, eine gattungsgemäße Schlupfkupplung derart weiterzubilden, daß eine stufenlose Drehzahlanpassung ohne Fremdenergie erzielt ist.

Diese Aufgabe ist mit dem Patentanspruch gelöst.

Der Vorteil der Erfindung ist, daß die für die jeweilige stufenlose Drehzahlanpassung erforderliche magnetische Leistung aus der Relativbewegung von Primärteil und Sekundärteil nach dem Generatorprinzip erzeugt und gezielt steuerbar ist und somit eine elektrische Fremdenergie entfallen kann.

In Ausgestaltung der Erfindung wird vorgeschlagen, daß jeder Reihen-Widerstand bzw. Impedanzwandler mit einem im/am Primärteil angeordneten Steuerkreis in Verbindung steht, wobei die elektrische Steuerleistung in einer im/am Primärteil gesondert angeordneten Spule generiert ist, und zur Steuerung/Regelung jedes Reihen-Widerstandes bzw. Impedanzwandlers der Steuerkreis über einen im Primärteil vorgesehenen Empfänger einer aggregatefest angeordneten Sendereinheit aktiviert ist.

Mit der Erfindung ist eine im Aufbau einfache Schlupfkupplung durch den Fortfall von Schleifeinrichtungen zur Übertragung der Signale erzielt.

Die erfindungsgemäß gestaltete Schlupfkupplung ist bevorzugt verwendet zum Antrieb eines Lüfters und/oder einer Wasserpumpe einer Brennkraftmaschine, wobei zur feinfühligen, bedarfsgerechten Drehzahlanpassung der Sendereinheit insbesondere kennfeldabhängige Signale eines Motorsteuergerätes zugeführt und induktiv an den Empfänger im Steuerkreis weitergegeben sind.

Als kleinbauende und trotzdem leistungsfähige Impedanzwandler dienen steuerbare Halbleiter als mit der jeweiligen Induktionsspule in Reihe geschaltete Widerstände.

Eine die erfindungsgemäße Schlupfkupplung hinsichtlich des einfachen Aufbaues weiter unterstützende Ausgestaltung sieht vor, daß am Primärteil über den Umfang verteilt mehrere Induktionsspulen radial angeordnet sind und daß jede Induktionsspule kurzgeschlossen ist mit einem in der Kurzschlußleitung angeordneten steuerbaren Halbleiter als Impedanzwandler.

Mit den in sich kurzgeschlossenen und gesondert gesteuerten Induktionsspulen wird in vorteilhafter Weise eine Bestromung untereinander verbundener Induktionsspulen aufgrund eines schadhaften Halbleiters sicher vermieden und somit eine gute Steuer- bzw. Regelbarkeit der Drehzahlanpassung sichergestellt.

### [Beispiele]

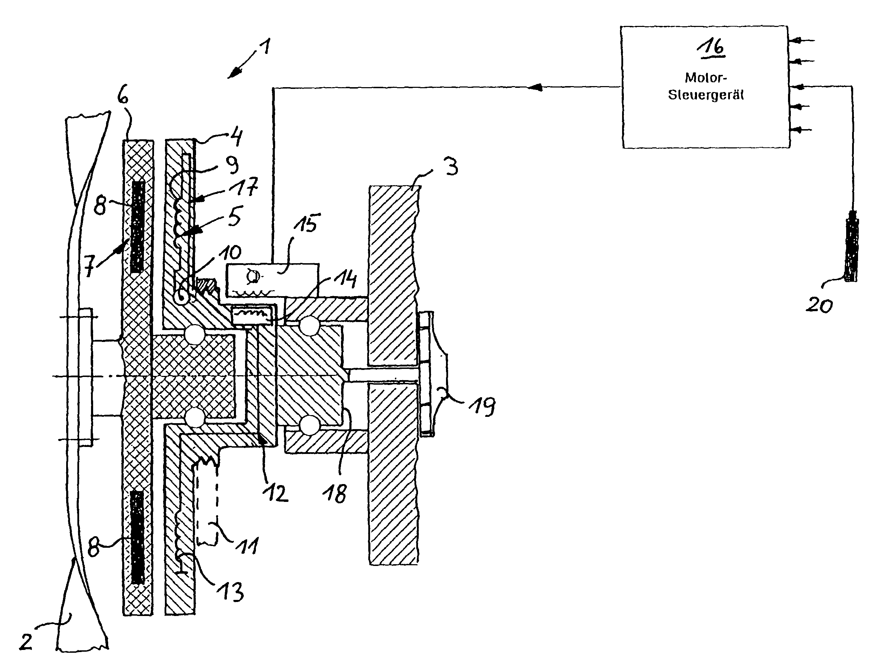

Die Erfindung ist anhand eines in der Zeichnung schematisch dargestellten Ausführungsbeispiels beschrieben.

Eine Schlupfkupplung 1 für einen drehzahlgesteuerten/geregelten Lüfter 2 einer nicht näher dargestellten Brennkraftmaschine 3 umfaßt ein angetriebenes Primärteil 4 mit einer magnetisierbaren Einrichtung 5 und ein mit dem Lüfter 2 drehfest verbundenes, dem Primärteil 4 benachbartes Sekundärteil 6 mit einer permanentmagnetischen Vorrichtung 7.

Zur Erzielung einer bedarfsweise stufenlosen Drehzahlanpassung des Lüfters 2 ohne Einsatz einer Fremdenergie wird erfindungsgemäß vorgeschlagen, daß die Vorrichtung 7 am Sekundärteil 6 ringförmig angeordnete Permanentmagnete 8 umfaßt, denen am Primärteil 4 als Einrichtung 5 Induktionsspulen 9 zugeordnet sind mit jeweils einem in Reihe angeordneten gesteuert/geregelt veränderbaren Widerstand 10 als Impedanzwandler. Die nach dem Induktionsprinzip in den Induktionsspulen 9 des beispielsweise über ein Keilriemengetriebe 11 angetriebenen Primärteiles 4 erzeugbaren Magnetfelder wirken mit den Permanentmagneten 8 im Sekundärteil 6 zur schlupfbehaftenden Drehmitnahme zusammen.

Zur Steuerung/Regelung der Impedanzwandler steht jeder Reihen-Widerstand 10 mit einem im/am Primärteil 4 angeordneten Steuerkreis 12 in Verbindung, wobei die elektrische Steuerleistung in einer im/am Primärteil 4 gesondert angeordneten Spule 13 generiert ist und zur Steuerung/Regelung jedes Reihen-Widerstandes 10 der Steuerkreis 12 über einen im Primärteil 4 vorgesehenen Empfänger einer aggregate- bzw. maschinenfest angeordneten Sendereinheit 15 aktiviert ist. Mit dem erfindungsgemäß unter Verzicht von Fremdenergie betreibbaren Steuerkreis 12 ist ein weiterer Beitrag zu einer im Aufbau einfachen Schlupfkupplung 1 erreicht.

Dieser einfache Aufbau wird weiter dadurch gefördert, daß der Sendereinheit 15 vorzugsweise kennfeldabhängige Signale eines Motorsteuergerätes 16 zugeführt und induktiv an den aus einer Leistungselektronik gebildeten Empfänger 14 im Steuerkreis 12 weitergegeben sind.

Zur Erzielung einer relativ geringen elektrischen Steuerleistung zum Steuern/Regeln der als Impedanzwandler dienenden Reihen-Widerstände 10 sind hierfür steuerbare Halbleiter vorgesehen.

Um mit geringem baulichen Aufwand der Schlupfkupplung 1 starke Magnetfelder in den Induktionsspulen 9 zu generieren, sind mehrere Induktionsspulen 9 am Primärteil über den Umfang verteilt radial angeordnet. Dem Ziel starker Magnetfelder in jeder Induktionsspule 9 dient ferner die Anordnung, daß jede Induktionsspule 9 kurzgeschlossen ist mit einem in jeder Kurzschlußleitung 17 angeordneten Halbleiter als Impedanzwandler.

Wie aus der schematischen Darstellung ersichtlich, ist das angetriebene Primärteil 4 der Schlupfkupplung 1 über eine Nabe 18 an der Brennkraftmaschine 3 drehbeweglich gelagert, wobei an der Nabe 18 eine Wasserpumpe 19 drehfest angeordnet ist. Ein im Kühlkreislauf der nicht näher dargestellten Brennkraftmaschine 3 angeordneter Temperaturfühler 20 ist mit dem mehrere Eingänge für Motorparameter aufweisenden Motorsteuergerät 16 signalführend verbunden.

## Patentansprüche

1. Schlupfkupplung für ein antreibbares Aggregat (2), insbesondere ein Nebenaggregat einer Brennkraftmaschine, umfassend
- ein Primärteil (4) zum Antrieb mit einer magnetisierbaren Einrichtung (5) und
- ein zur mit dem Aggregat (2) drehfesten Verbindung, dem Primärteil (4) benachbartes Sekundärteil (6) mit einer permanentmagnetischen Vorrichtung (7), wobei
- die Vorrichtung (7) im oder am Sekundärteil (6) ringförmig angeordnete Permanentmagnete (8) umfasst, denen
- im oder am Primärteil (4) als Einrichtung (5) eine Induktionsspule (9) zugeordnet ist mit einem in Reihe angeordneten gesteuert oder geregelt veränderbaren Widerstand (10) als Impedanzwandler,
**dadurch gekennzeichnet, dass** jeder Reihenwiderstand (10) bzw. Impedanzwandler mit einem im oder am Primärteil (4) angeordneten Steuerkreis (12) in Verbindung steht, wobei zur Generation der elektrischen Steuerleistung eine im oder am Primärteil (4) gesondert angeordneten Spule (13) vorgesehen ist und ein Empfänger im Primärteil vorgesehen ist, wobei zur Steuerung oder Regelung jedes Reihenwiderstandes (10) bzw. Impedanzwandlers der Steuerkreis (12) über den Empfänger (14) von einer aggregatefest angeordneten Sendereinheit (15) aktivierbar ist.

2. Schlupfregelung nach Anspruch 1,
**dadurch gekennzeichnet, dass** der Sendereinheit (15) kennfeldabhängige Signale eines Motorsteuergerätes (16) zuführbar sind und induktiv an den Empfänger (14) im Steuerkreis weiterleitbar sind.

3. Schlupfkupplung nach den Ansprüchen 1 und 2,
**dadurch gekennzeichnet, dass** als Reihenwiderstand (10) bzw. Impedanzwandler ein steuerbarer Halbleiter dient.

4. Schlupfkupplung nach den Ansprüchen 1 bis 3,
**dadurch gekennzeichnet,**
- **dass** am Primärteil (4) über den Umfang verteilt mehrere Induktionsspulen (9) radial angeordnet sind und
- **dass** jede Induktionsspule (9) kurzgeschlossen ist mit einem in jeder Kurzschlussleitung (17) angeordneten Impedanzwandler (10, Halbleiter).

5. Verwendung einer Schlupfkupplung nach den Ansprüchen 1 oder 2,
zum Antrieb eines Lüfters (2) und/oder einer Wasserpumpe (19) einer Brennkraftmaschine (3).

## Claims

1. A slip clutch for a drivable unit (2), especially an auxiliary unit of an internal combustion engine, comprising
- a primary drive part (4) comprising a magnetisable device (5) and
- a secondary part (6) adjoining the primary part (4) for co-rotatable connection to the unit (2), comprising a permanent magnet device (7), wherein
- the device (7) comprises permanent magnets (8) disposed in a ring on the secondary part (6) and
- is associated in or on the primary part (4) with a device (5) in the form of an induction coil (9) comprising an impedance transducer in the form of a resistor (10) disposed in series and variable by open-loop or closed-loop control,
**characterised in that** each series resistor (10) or impedance transducer is connected to a control circuit (12) disposed in or on the primary part (4), wherein
- in order to generate the electric control power, a coil (13) disposed separately in or on the primary part (4) is provided and a receiver is provided in the primary part, wherein
- for the purpose of open-loop or closed-loop control of each series resistor (10) or impedance transformer, the control circuit (12) is activatable, via the receiver (14), by a transmitter unit (15) fixed to the drivable unit.

2. A slip control means according to claim 1, **characterised in that** signals, dependent on a performance graph, from an engine control unit (16) can be supplied to the transmitter unit (15) and inductively transmitted to the receiver (14) in the control circuit.

3. A slip clutch according to claims 1 and 2, **characterised in that** the series resistor (10) or impedance transformer is a controllable semiconductor.

4. A slip clutch according to claims 1 to 3, **characterised in that**
- a number of induction coils (9) are radially distributed along the periphery on the primary part (4) and
- each induction coil (9) is short-circuited by an impedance transformer (10; semiconductor) disposed in each short-circuit line (17).

5. Use of a slip clutch according to claims 1 or 2 for driving a fan (2) and/or a water pump (19) of an internal combustion engine (3).

## Revendications

1. Accouplement à induction pour un agrégat entraînable (2) et en particulier pour un agrégat secondaire d'un moteur à combustion interne, qui comprend
- un élément primaire entraîné (4), comportant un dispositif aimantable (5), et un élément secondaire (6) voisin de l'élément primaire (4), relié à l'agrégat (2) de manière à résister aux torsions et comportant un dispositif à aimantation permanente (7),
- où le dispositif (7) comprend des aimants permanents (8), disposés en forme d'anneau dans (ou sur) l'élément secondaire (6),
- et auxquels est associée, en tant que dispositif (5), une bobine d'inductance (9) mise en place dans (ou sur) l'élément primaire (4) et comportant une résistance (10) disposée en série, variable de manière contrôlée (ou réglée) et fonctionnant comme transformateur d'adaptation d'impédance,
**caractérisé en ce que**
chaque résistance en série (ou transformateur d'adaptation d'impédance) (10) est reliée à un circuit de commande (12) disposé dans (ou sur) l'élément primaire (4), alors que pour générer la puissance de commande électrique, est prévue une bobine (13) disposée séparément dans (ou sur) l'élément primaire (4) et qu'il est également prévu un récepteur mis en place dans l'élément primaire (4), le circuit de commande (12) pouvant être activé, en vue de commander (ou régler) chaque résistance en série (ou transformateur d'adaptation d'impédance) (10), par l'intermédiaire du récepteur (14), à partir d'une unité émettrice (15) disposée fixement par rapport à l'agrégat.

2. Accouplement à induction selon la revendication 1,
**caractérisé en ce que**
des signaux, dépendant du réseau de caractéristiques, d'un appareil de commande de moteur (16), peuvent être amenés à l'unité émettrice (15) et transmis de manière inductive au récepteur (14) mis en place dans le circuit de commande (12).

3. Accouplement à induction selon les revendications 1 et 2,
**caractérisé en ce qu'**
on utilise un semi-conducteur réglable en tant que résistance en série (ou transformateur d'adaptation d'impédance) (10).

4. Accouplement à induction selon les revendications 1 à 3,
**caractérisé en ce que**
sur la partie primaire (4) sont disposées radialement plusieurs bobines d'inductance (9) réparties sur son périmètre,
chaque bobine d'inductance (9) est mise en court-circuit avec un transformateur d'adaptation d'impédance (semi-conducteur) (10) disposé dans chaque conducteur en court-circuit (17).

5. Utilisation d'un accouplement à induction selon la revendication 1
ou 2,
en vue d'entraîner un ventilateur (2) et/ou une pompe à eau (19) d'un moteur à combustion interne (3).
